# EUROPEAN PATENT SPECIFICATION

(11) **EP 1 660 284 B1**
(45) Date of publication and mention of the grant of the patent: **18.10.2017**
(21) Application number: 04739032.3
(22) Date of filing: 02.08.2004
(51) Int. Cl.: B27B 13/06, B23D 63/00

(54) **METHOD AND APPARATUS FOR CROWNING BAND SAW PULLEY WHEELS**
VERFAHREN UND VORRICHTUNG ZUM BALLIGDREHEN VON BANDSÄGENRIEMENSCHEIBEN
PROCEDE ET APPAREIL POUR ROUES A POULIE DE SCIE A LAME

(30) Priority: 12.08.2003 DK 200300213 U
(43) Date of publication of application: 31.05.2006
(73) Proprietor: Hansen, Søren Luja, 5000 Odense C (DK)
(72) Inventor: Hansen, Søren Luja, 5000 Odense C (DK)
(74) Representative: Holme Patent A/S
(86) International application number: PCT/DK2004/000535
(87) International publication number: WO 2005/014245

(56) References cited:
- US-A- 4 027 568

## Description

### Field of Invention

The present invention relates to a method of, and a bandsaw with an apparatus for, crowning bandsaw pulley wheels.

### Background of the Invention

A typical bandsaw comprises two pulley wheels arranged on a frame such that their axes of rotation are offset from each other. A saw blade in the form of a looped band is arranged in tension around the pulley wheels. A motor drives the lower pulley wheel. The upper pulley wheel is free to rotate as the saw blade is put into motion by the lower pulley wheel.

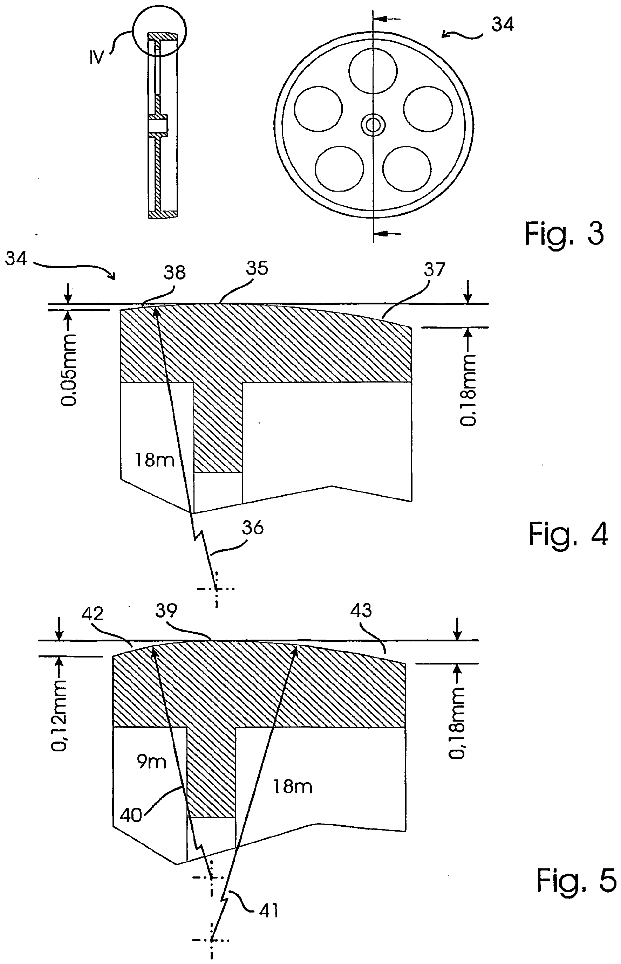

In order to keep the band saw blade from sliding off the pulley wheels, the pulley wheels are "crowned". The term "crowning" refers to shaping the peripheral surface of the pulley wheel, such that, when looking at a cross section of the surface, the surface peaks at a certain point. This peak is usually located 1/3-2/3 of the pulley wheel's width from the front edge of the pulley wheel. The crown keeps the band saw blade properly aligned on the pulley wheels. Two pulley wheels with different exaggerated crowns are shown in figures 3 and 4.

During normal use, the surface of the pulley wheels get worn and the crowns are eventually worn off or distorted. It is therefore often required to re-crown bandsaw pulley wheels.

### Description of the Prior Art

There are two typical ways of re-crowning pulley wheels. The first is to remove the pulley wheels from the bandsaw and to send them to a machine shop equipped with a large lathe. The pulley wheels are mounted in the lathe and a profile can then be cut into them. This makes it possible to apply a very accurate crown. The lathes used nowadays are typically CNC lathes. Since CNC lathes can be easily programmed to cut different profiles, it is easy to cut a very specific profile. This allows the crown of the bandsaw pulley wheel to be optimised thereby permitting higher production rates.

One disadvantage of this method is that while the pulley wheels are at the factory, the bandsaw cannot be used. This results in costly downtime for the sawmill. In order to prevent downtime, some sawmills have extra pulley wheels which can be mounted on the bandsaw while the worn pulley wheels are at the machine shop. The extra pulley wheels are then used until they are worn. At that point they are exchanged with the newly crowned pulley wheels returned from the machine shop. The extra pulley wheels are then sent to the machine shop for re-crowning. The process is repeated the next time the pulley wheels require crowning. However, having an extra set of pulley wheels is quite expensive and many sawmills don't have this luxury.

Another disadvantage of this method is that the demounting and remounting of the pulley wheels is a difficult job since the pulley wheels are quite heavy. Therefore a crane or some other form of lifting equipment is required.

The other common way of re-crowning a pulley wheel is to mount a manual grinding machine to the frame of the band saw. An operator then manually grinds a crown into the pulley wheels. This method does not require demounting of the pulley wheel and sending it to a machine shop. This method is therefore quicker, resulting in less downtime.

The grinding machine makes use of a grinding wheel mounted on a linear slide. The grinding wheel is not powered but when it is brought into contact with the pulley wheel it spins. However, the grinding wheels axis of rotation is oriented at 45° to the pulley wheel's axis of rotation so that the grinding wheel spins slower than the pulley wheel. Due to the speed difference between the pulley wheel and the grinding wheel, material is ground from the pulley wheel.

The linear slide can be adjusted so that it assumes different angles to the rotation axis of the pulley wheel. By moving the grinding wheel along the slide, the grinding wheel cuts a linear profile into the surface of the pulley wheel. Theoretically, by adjusting the linear slide through a large number of angles, a smooth profile could be manufactured.

However, typically, the slide is set at only two or three angles. This results in a typical profile which is comprised of two or three straight lines. This means that it is not very easy to optimise the crown. It is generally accepted in the industry that in order to get a good profile and therefore an optimised throughput, the pulley wheels should be sent to a machine shop where the pulley wheels can be crowned on a CNC lathe. A further complication with the grinding method is that due to the nature of the grinding operation, the surface of the pulley wheel becomes very rough.

An additional serious issue with this method is that there is a large safety risk to the operator performing the crowning operation because the operator needs to manually operate the grinding machine. Since the manual grinding machine is mounted in the space between the pulley wheels, the operator, during the operation, is very close to the pulley wheels and the band saw blade, all of which are moving at high speeds.

### Summary of the Present Invention

A first aim of the current invention is to provide a method of, and an apparatus for, crowning a band saw pulley wheel, which creates a more accurate and smooth crown than previously known.

A second aim of the current invention is to provide a method of, and an apparatus for, crowning a band saw pulley wheel, which minimizes downtime at the sawmill.

A third aim of the current invention is to provide a method of, and an apparatus for, crowning a band saw pulley wheel which allows for the pulley wheel to be crowned with many different profiles.

A fourth aim of the current invention is to provide a method of, and an apparatus for, crowning a pulley wheel which minimizes the risk to the operator. These aims can be achieved by a method according to claim 1 and a bandsaw with an apparatus for crowning band saw pulley wheels according to claim 8.

The new and unique way in which the current invention fulfils the above mentioned aims is by presenting a method of crowning a band saw pulley wheel comprising: mounting a base fixture to the frame of the band saw, mounting a CNC x-y table to said base fixture, mounting a tool piece to said CNC x-y table, aligning said CNC x-y table and said tool piece with the pulley wheel to be crowned, programming the CNC x-y table such that once said crowning operation is started said tool piece is brought into contact with the surface of the pulley wheel and then follows a specific path such that the pulley wheel is crowned with a specific profile, driving the pulley, and starting the crowning operation.

In this way it is possible to crown a bandsaw pulley wheel very accurately. Since the bandsaw pulley wheel is crowned on the actual bandsaw, the crown is applied to the pulley wheel relative to the actual spinning orientation of the pulley wheel. In addition since the upper pulley wheel is driven by a band arranged in tension around the pulley wheels, the wobble due to play in the bearings of the pulley wheels is removed because of the forces applied to the pulley wheels by the band. Therefore, the crown can be more accurate than one applied on a CNC machine at a remote location.

In addition, since the apparatus is attached directly to the machine, it is not necessary to remove the pulley wheel from the bandsaw, thereby preventing long downtime at the sawmill. Because the crown is applied by a CNC x-y table, it is also very easy to apply different crowns, just by reprogramming the CNC x-y tables profile.

Furthermore, since the CNC x-y table does not require manual control, the operator can control the apparatus from a distance and is therefore safer and less likely to be hurt by the bandsaw.

The CNC x-y table mentioned above refers to an apparatus commonly known in the automation industry. Said apparatus typically comprises two linear slides mounted on a base plate, where the axes of motion of said two linear slides are perpendicular to each other, hence the term x-y table. The motion of the linear slides is typically powered by servomotors and controlled by a microprocessor. CNC stands for Computer Numerical Control and refers to the computer-controlled nature of the apparatus. The microprocessor can be programmed to control the two slides such that a tool piece connected to the two slides follows a path on a 2D plane defined by the axes of motion of the linear slides. It should be mentioned however, that the term CNC x-y table should be interpreted in a broad sense. In essence the term in the context of this invention refers to an apparatus which can be programmed to move a tool piece along a path on a 2D plane.

While it is commonly known that manual tasks can be automated with the help of computers and automatic control, it has not been obvious to bandsaw experts that it would be possible to put a CNC machine on a band saw for use in crowning the pulley wheels. This is due to a number of technical biases in this industry.

For the first, it is commonly known that alignment of a CNC machine is very important to the end result. A person skilled in the art of crowning band saw pulley wheels, would expect that in order to get the proper alignment, it would be very difficult to attach a CNC machine to the band saw itself and get it properly aligned.

Secondly, CNC machines are traditionally very large and heavy machines. This is so that the machine is stiff and does not bend during the machining operation. It would therefore be expected that a CNC machine for use in the crowning of band saw pulley wheels would be large and heavy. This is exemplified by the very large CNC machines, which are currently used to machine pulley wheels. A large and heavy CNC machine would therefore not be suitable for mounting directly to a bandsaw. The large size is an especially large deterrent since the CNC machine would have to be mounted in the space between the pulley wheels, said space being quite limited.

Thirdly, bandsaw pulley wheels spin too quickly for normal machining operations such as lathing. This means that in order for a CNC machine to be effective, the rotation speed of the band saw pulley wheels needs to be slowed down. This is not possible on the majority of band saws, since they are powered by fixed speed electric motors.

Fourthly, there are a large number of different types of bandsaws available. Each bandsaw type has different dimensions and a different set-up. This suggests that many different CNC machines would need to be made in order to connect to all the different bandsaw types. The large number of variants implies high costs.

Fifthly, it would be expected that the bandsaw would have to be modified in order to attach the CNC machine. In other words, holes would have to be drilled, plates welded on, surfaces machined, etc... This implies a lot of work and serious invasive procedures on the bandsaw frame.

Therefore, even though it is common enough to automate manual tasks with a computer in other industries, the large number of technical prejudices and deterrents in this industry has kept sawmills and bandsaw experts from mounting a CNC machine directly to a bandsaw to crown the pulley wheels.

In a preferred embodiment of the method, during said alignment step, one axis of said CNC x-y table can be made perpendicular to the pulley wheel axis and the other axis can be made parallel to the pulley wheel axis. In this way, the axis of the CNC x-y table which is perpendicular to the axis of the pulley wheel controls the depth of the cut and the other axis controls the axial position of the tool piece.

In order to make alignment easier, a line laser, mounted to said CNC x-y table, can be used during said alignment step. In this way, the laser can project a line onto the bandsaw wheel which can be used to give a visual feedback on the alignment of the CNC x-y table.

For bandsaws which have fixed speed motors, a separate drive motor can be mounted to the bandsaw in order to drive the pulley wheel independently of the bandsaw motor. This allows the rotation speed of the pulley wheel to be controlled accurately.

In one preferred embodiment, said separate drive motor can engage with a band arranged around the pulley wheels such that both pulley wheels are driven by said separate drive motor. The band arranged the pulley wheels could take many forms. To protect the operator and the apparatus, said band could be a steel band without any saw teeth. However, the band could be made of many other materials. It could also be the saw blade of the bandsaw itself.

To get a good surface finish and to ensure fast cutting operation a lathe cutting tool can be used as the tool piece. However, many other tool pieces could be used. In general it is a tool which abrades or cuts the surface of the pulley wheel in order to remove material. For wheels which have been hardened, a self powered grinding wheel could be used which can cut through the hardened surface of the pulley wheel and give a very good surface finish.

The method described above can be implemented on an apparatus which comprises a base fixture attachable to the frame of a bandsaw, a CNC x-y table attachable to said fixture, a tool piece attachable to said CNC x-y table, and alignment means which allow said tool piece and said CNC x-y table to be aligned with said pulley wheels. By attaching the CNC x-y table to the bandsaw via a base fixture, it is possible to modify only the base fixture such that the CNC x-y table can be attached to many different bandsaws.

Said alignment means allow the axes of the CNC x-y table to be aligned with the axis of the pulley wheel which is to be machined. In this way, the CNC x-y table can be attached to the bandsaw and then precisely aligned such that the camber on the pulley wheel is accurate.

### Brief Description of the Figures

The invention will be explained in greater detail below where further advantageous properties and example embodiments are described with reference to the drawings, in which
Fig. 1 is a schematic perspective representation of one embodiment of an apparatus according to the invention mounted on a typical bandsaw,
Fig. 2 shows an exploded view of the same from another viewpoint,
Fig. 3 shows a traditionally crowned pulley wheel and a cross section thereof,
Fig. 4 shows a detail view of the cross section of a bandsaw pulley wheel with a typical crown profile having a single radius, and
Fig. 5 shows a detail view of the cross section of a bandsaw pulley wheel with a crown profile having a double radius.

### Description of a Preferred Embodiment of the Invention

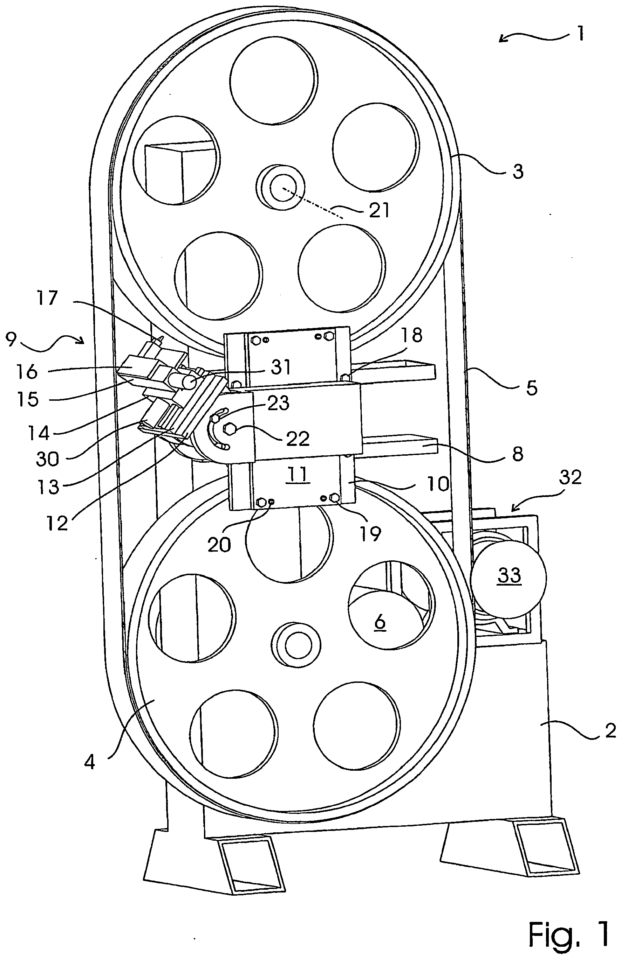

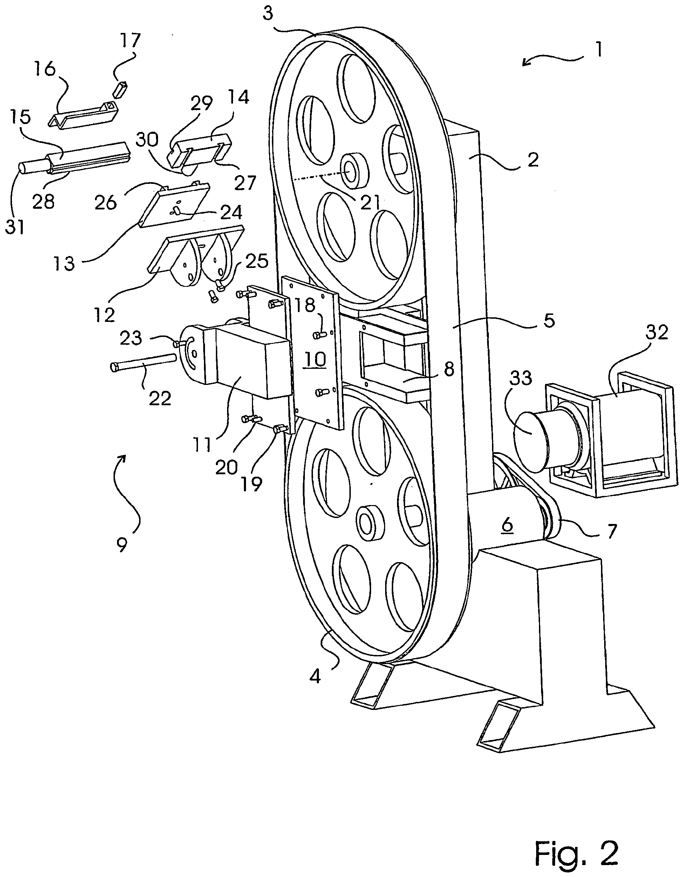

The bandsaw 1 shown in figures 1 and 2 is a simplified, schematic representation of one of the many different types of bandsaws available. The bandsaw comprises a frame 2, an upper pulley wheel 3, a lower pulley wheel 4, and a saw blade 5 arranged around the two pulley wheels. The lower pulley wheel is driven by an electric motor 6 via a belt drive 7. The upper pulley wheel is mounted on free rolling bearings. As the bottom pulley wheel turns, the bandsaw blade causes the upper pulley wheel to rotate synchronously. It should be noted that the upper pulley wheel is not driven directly and if the band saw blade is removed, the upper pulley wheel does not rotate.

A blade guide mechanism 8 is attached to the frame of the bandsaw.

The embodiment 9 of the crowning apparatus shown in figures 1 and 2 mainly comprises a base plate 10, a base fixture 11, a hinge plate 12, a CNC x-y table 13,14,15, a tool piece holder 16, and a tool piece 17. The CNC x-y table comprises a CNC base plate 13, a lower slide plate 14, and an upper slide plate 15.

The base plate is attached to the bandsaw via bolts 18. Since different bandsaws have different shapes and sizes, the base plate can be custom made for each type of bandsaw. In most cases, the base plate can be designed such that it uses mounting holes which already exist on the band saw. In the current example, the base plate is designed to be mounted on the blade guide and is bolted to the blade guide using holes already present on the blade guide. In this way, no modify-cations need to be made to the bandsaw in order to mount the crowning apparatus. In addition, since the base plate is the only custom part which needs to be manufactured for bandsaws of this type, it is relatively simple and inexpensive to adapt the crowning apparatus to many different types of bandsaws. Other bandsaw will require a custom base fixture as well.

Once the base plate is bolted to the bandsaw, the base fixture 11 is bolted to the base plate via bolts 19. Adjustment screws 20 allow the base fixture to be aligned with the axis 21 of the pulley wheel to be machined. The horizontal arm of the base fixture can be adjusted such that its' length (in the horizontal direction) can be adapted to the particular bandsaw. The CNC base plate 13 is attached to the base fixture via the hinge plate 11 which rotates about a pin 22. The hinge plate allows the CNC base plate to be aligned such that one axis of the CNC base plate is perpendicular to the axis 21 of the pulley wheel to be machined. The angle of the hinge plate is held constant by bolts 23. The CNC base plate has a centre tap 24, which fits into a hole in the centre of the hinge plate. This allows the CNC base plate to be pivoted until it is aligned such that the other axis of the CNC base plate is parallel to the axis of the pulley wheel to be machined. Bolts 25 hold the CNC base plate in place.

The actual CNC part of the apparatus are the upper and lower slide plates 14, 15. Rails 26 on the CNC base plate engage with grooves 27 on the lower slide plate allowing the lower slide plate to slide along the rails. The rails 24 are arranged along an axis which is perpendicular to the axis of the pulley wheel. A rail 28 on the upper slide plate engages with a groove 29 on the lower slide plate allowing the upper slide plate to slide along the groove. The rail on the upper slide plate is arranged such that it is parallel to the axis of the pulley wheel.

A servomotor 30 connected to the lower slide plate controls the motion of the lower slide plate. A servomotor 31 connected to the upper slide plate controls the motion of the upper slide plate. The servomotors are controlled by servomotor controllers (not shown) connected to the servomotors via cables (not shown). The servomotor controllers are controlled via a microprocessor (not shown) which allows the operator to interface with the machine.

In the current embodiment, the tool piece 17 used is a cutting tool from a lathe. This type of tool piece allows for precise shaping of the crown, as well as being efficient and resulting in a good surface finish. It is also possible to use a powered grinding wheel as a tool piece. This results in a very nice surface finish, but is more time consuming, since less material is removed as compared to the lathe cutting tool. However, the grinding wheel can be used in the case where the pulley wheel surface has been hardened.

A lathe cutting tool requires a relatively low cutting speed. This means that the motor which drives the bandsaw pulley wheels during normal use is not suitable for use in this application since it drives the wheels at a very high speed of rotation. It is therefore necessary to either slow down the speed of the motor or to add a separate motor. Since most bandsaw motors run with a fixed speed motor, it is not usually possible to decrease the operation speed. Therefore a separate drive motor 32 is added in the current embodiment.

The separate drive motor 32, is bolted to the frame of the bandsaw. The saw blade 5 is replaced by a steel band without any teeth in order to decrease the safety risk for the operator and the separate drive motor assembly. A drive pulley 33, with a rubber surface, connected to the separate drive motor is pressed against the steel band. When the separate drive motor is engaged, the rubber surface of the drive pulley causes the steel band to move, thereby putting both pulley wheels in rotation. The separate drive motor does not need to be very powerful since the speeds and the cutting forces are relatively low.

In the following, one embodiment of a method used to crown a pulley wheel with the above-mentioned apparatus will be described.

In a first step, the base plate 10 is mounted to the bandsaw frame 2. As mentioned above, the base plate is usually custom-designed for each bandsaw. In the current example, the base plate is designed such that it attaches to the blade guides 8. It should be mentioned that in this particular example, the base plate is bolted to holes already present in the blade guides. It is therefore unnecessary to modify the bandsaw in any way in order to attach the base plate. This will be the case for many bandsaws, however, some bandsaws might need to be modified slightly in order to mount the base plate.

After the base plate is securely attached to the bandsaw, the base fixture 11 is attached to the base plate. If the surface to which the base plate is attached to is properly aligned with the frame of the bandsaw and the axes of rotation of the pulley wheels, it is not necessary to align the base fixture. However, if it is not possible to find a surface which is aligned with the frame and the pulley wheels, then the base fixture can be aligned with the adjustment screws 20. In this case, a line laser can be used to align the base plate. An alignment procedure using a line laser is described further on in the section on the alignment of the x-axis of the CNC x-y table. Once the base fixture is properly mounted and aligned, the other components of the apparatus are assembled onto the base fixture.

In cases where the bandsaw motor 6 is a fixed speed motor, or where it cannot spin the pulley wheels at a slow enough speed, a separate drive motor 32 is used. First the bandsaw blade is exchanged with a steel band 5 having no teeth. This protects both the operator and the separate drive motor assembly. The separate drive motor 32 is then arranged such that the rubber surface of the drive pulley 33 is pressed up against the steel band. In the current example, the separate drive motor is bolted to the frame of the bandsaw.

Once the apparatus is assembled and the separate drive motor installed, the CNC x-y table needs to be aligned with the axis of the pulley wheel to be machined. For the following discussion, the x-axis of the CNC x-y table is defined as being parallel to the axis 21 of rotation of the pulley wheel, and the y-axis of the CNC x-y table is defined as being perpendicular to the axis of rotation of the pulley wheel. The positive y-direction is defined as being towards the centre of the pulley wheel and the positive x-direction is defined as being towards the outside of the wheel.

The first step is to align the Y-axis of the CNC x-y table such that it is perpendicular to the axis 21 of the pulley wheel to be machined. The y-axis of the CNC x-y table is defined by the rails 26 and the grooves 27 on the CNC base plate 13 and the lower slide plate 14 respectively. To align the y-axis, a straight edge (not shown), such as a long ruler or an elongated straight profile, is attached to the CNC x-y table. The straight edge is mounted such that one of its' edges is at the same height as the centre of the tool piece 17. The hinge plate is then angled such that this edge intersects with the axis of rotation 21 of the pulley wheel to be machined. Once the hinge plate is angled properly, the bolts 23 are tightened to lock the hinge in place. In some cases the length of the arm of the base fixture will also need to be adjusted in this step.

The next step is to align the x-axis of the CNC x-y table such that it is parallel with the axis 21 of the pulley wheel. The x-axis of the CNC x-y table is defined by the rail 28 and the groove 29 on the upper slide plate 15 and the lower slide plate 14 respectively. During the alignment, a line laser (not shown) is attached to the CNC x-y table. A line laser is a laser which projects a plane of light instead of a single beam. In this way, it projects a line onto a surface instead of a single point. The line laser is aligned such that the plane of light is parallel to the y-axis and perpendicular to the x-axis. The x-axis is aligned, by ensuring the plane of line emitted by the line laser is parallel with the surface of the pulley wheel.

However, since all pulley wheels caster slightly, it is important to calibrate the wheel first in order to ensure that the CNC x-y table is not misaligned. In order to correct for the caster, the rim of the pulley wheel is measured with a measuring dial in the x-axis direction. The maximum and minimum points on the rim of the pulley wheel are found. These two points should lie on opposite sides of the pulley wheel. Calibration plates are then added to the minimum point such that the maximum and minimum points are the same.

The wheel is then arranged such that the maximum and minimum points are arranged along the y-axis of the CNC x-y table. The distance between the points and the laser plane is then measured. The CNC base plate 13 is then pivoted around the pin 24 until the distances are equal. The bolts 25 are then tightened thereby locking the CNC x-y table in the correct alignment.

Once the apparatus is properly aligned, the "zero position" of the CNC table is calibrated. The zero position defines the starting point for all future motions of the CNC x-y table. The tool piece is first moved such that its point is at the inner edge of the pulley wheel. A calibration button on the user interface (not shown) is then pressed. This defines the zero x-coordinate. The tool piece is then moved such that its point is at the highest point of the pulley wheel. This point is typically the previously crown. A second calibration button is then pressed on the user interface. This defines the zero y-coordinate.

Once the machine is calibrated, the operator can define the desired profile and the machine is put into automatic mode. The machine then proceeds to cut the correct profile into the pulley wheel in a number of passes as is commonly known to experts in the field of CNC machines.

It will be obvious to the reader after reading description of the method presented above, that other methods of calibration and alignment are possible. The above description presents only one example of a method according to the invention. It should also be obvious to the skilled reader, that other forms of apparatus could be developed with similar purpose. The apparatus described above serves only as an example of one apparatus according to the invention.

Since the profile of the crown can easily be changed by reprogramming the motion of the CNC x-y table, many different crown profiles can be used. Fig. 3 shows a typical bandsaw pulley wheel 34 and a cross section of this. Fig. 4 shows an exaggerated detail view of the crown profile 35 of a typical bandsaw pulley wheel. As can be seen from fig. 4, the crown profile is defined by a single radius 36. This means that the rear edge 37 is more profiled than the front edge 38 of the pulley wheel.

The crown profile 39 shown in Fig. 5 is different than the typical crown profiles since it is defined by two different radii 40 and 41. The front edge 42 is defined by a smaller radius 40 than the rear edge 43. This means that the profile on the front edge is steeper than the profile on the rear edge. This increases the centring action of the crown profile. By increasing this centring action, the force required to push the bandsaw blade off the pulley wheel is increased. This allows the speed of the wood being fed into the bandsaw to be increased, thereby allowing the production capacity of the bandsaw to be significantly increased.

It is not possible to accurately produce profiles of this nature using the method of grinding along a linear slide. Therefore, if it is desired to optimise the production capacity of the bandsaw by using an optimised profile, it is necessary to use a CNC machine. If it is not desired, or not possible, to remove the pulley wheels and send them to a machine shop, then the apparatus and the method according to the current invention are necessary.

## Claims

1. A method of crowning a band saw pulley wheel (3,4) comprising:
- mounting a base fixture (10,11,12) to the frame of the band saw (2),
- mounting a CNC x-y table (13,14,15) to said base fixture,
- mounting a tool piece (17) to said CNC x-y table,
- aligning said CNC x-y table and said tool piece with the pulley wheel to be crowned (3),
- programming the CNC x-y table such that once the crowning operation is started said tool piece is brought into contact with the surface of the pulley wheel and then follows a specific path such that the pulley wheel is crowned with a specific profile,
- driving the pulley wheel, and
- starting the crowning operation.

2. A method according to claim 1, **characterized in that** during said alignment step one axis of said CNC x-y table (13,14,15) is made perpendicular to the pulley wheel axis (21) and the other axis is made parallel to the pulley wheel axis.

3. A method according to claim 1 or 2 **characterized in that** a line laser, mounted to said CNC x-y table (13,14,15), is used during said alignment step.

4. A method according to claim 1, 2 or 3, **characterized in that** a separate drive motor (32) is mounted to the bandsaw in order to drive the pulley wheel (3) independently of the bandsaw motor (6).

5. A method according to claim 4 **characterized in that** said drive motor (32) engages with a band (5) arranged around the pulley wheels (3,4) such that both pulley wheels are driven by said drive motor.

6. A method according to claim 5 **characterized in that** said band (5) is a steel band without any saw teeth.

7. A method according to any one of claims 1 to 6, **characterized in that** a lathe cutting tool (17) is used as the tool piece.

8. A bandsaw comprising a frame (2) and an apparatus (9) for use in crowning band saw pulley wheels (3,4), the apparatus comprising:
- a base fixture (10,11,12) attached to said frame (2) of the bandsaw,
- a CNC x-y table (13,14,15) attached to said base fixture,
- a tool piece (17) attached to said CNC x-y table, and
- alignment means (20,22,23,24,25) which allow said tool piece and said CNC x-y table to be aligned with said pulley wheels.

9. A bandsaw according to claim 8, **characterized in that** said apparatus further comprises a separate drive motor (32), independent of the actual bandsaw motor (6), which drives the pulley wheels (3,4) via a band arranged over the pulley wheels.

10. muse of a band saw with an apparatus (9) according to claim 8 or 9 for crowning band saw pulley wheels (3,4).

11. Use of a band saw with an apparatus (9) according to claims 8 or 9 for crowning a band saw pulley wheel with a crown profile (39) defined by two different radii (40,41), where the radius (40) at the front edge (42) is smaller than the radius (41) at the rear edge (43).

## Patentansprüche

1. Verfahren zum Balligdrehen einer Bandsägeriemenscheibe (3, 4), aufweisend:
- Montieren einer Basisbefestigung (10,11, 12) am Rahmen der Bandsäge (2),
- Montieren eines CNC-x-y-Tischs (13, 14, 15) an der Basisbefestigung,
- Montieren eines Werkzeugstücks (17) an dem CNC-x-y-Tisch,
- Ausrichten des CNC-x-y-Tischs und des Werkzeugstücks mit der ballig zu drehenden Riemenscheibe (3),
- Programmieren des CNC-x-y-Tischs derart, dass, sobald der Vorgang des Balligdrehens gestartet ist, das Werkzeugstück mit der Oberfläche der Riemenscheibe in Kontakt gebracht wird und dann einem bestimmten Pfad folgt, damit die Riemenscheibe mit einem bestimmten Profil ballig gedreht wird,
- Antreiben der Riemenscheibe und
- Beginnen des Vorgangs des Balligdrehens.

2. Verfahren nach Anspruch 1, **dadurch gekennzeichnet, dass** während des Ausrichtungsschritts eine Achse des CNC-x-y-Tisches (13, 14, 15) senkrecht zur Riemenscheibenachse (21) ausgerichtet wird und die andere Achse parallel zur Riemenscheibenachse ausgerichtet wird.

3. Verfahren nach Anspruch 1 oder 2, **dadurch gekennzeichnet, dass** ein Linienlaser, der an dem CNC-x-y-Tisch (13, 14, 15) befestigt ist, während des Ausrichtungsschritts verwendet wird.

4. Verfahren nach Anspruch 1, 2 oder 3, **dadurch gekennzeichnet, dass** ein separater Antriebsmotor (32) an der Bandsäge befestigt ist, um die Riemenscheibe (3) unabhängig vom Bandsägemotor (6) anzutreiben.

5. Verfahren nach Anspruch 4, **dadurch gekennzeichnet, dass** der Antriebsmotor (32) mit einem Band (5) im Eingriff ist, das derart um die Riemenscheiben (3, 4) angeordnet ist, dass beide Riemenscheiben von dem Antriebsmotor angetrieben werden.

6. Verfahren nach Anspruch 5, **dadurch gekennzeichnet, dass** das Band (5) ein Stahlband ohne Sägezähne ist.

7. Verfahren nach einem der Ansprüche 1 bis 6, **dadurch gekennzeichnet, dass** als Werkzeugstück ein Drehstahlschneidwerkzeug (17) verwendet wird.

8. Bandsäge mit einem Rahmen (2) und einer Vorrichtung (9) zur Verwendung beim Balligdrehen von Bandsägeriemenscheiben (3, 4), wobei die Vorrichtung umfasst:
- eine Basisbefestigung (10, 11, 12), die am Rahmen (2) der Bandsäge befestigt ist,
- einen CNC-x-y-Tisch (13, 14, 15), der an der Basisbefestigung befestigt ist,
- ein Werkzeugstück (17), das am CNC-x-y-Tisch befestigt ist, und
- Ausrichtungsmitteln (20, 22, 23, 24, 25), die es ermöglichen, das Werkzeugstück und den CNC-x-y-Tisch mit den Riemenscheiben auszurichten.

9. Bandsäge nach Anspruch 8, **dadurch gekennzeichnet, dass** die Vorrichtung ferner einen, unabhängig von dem eigentlichen Bandsägemotor (6), separaten Antriebsmotor (32) aufweist, der die Riemenscheiben (3, 4) über ein um die Riemenscheiben angeordnetes Band antreibt.

10. Verwendung einer Bandsäge mit einer Vorrichtung (9) nach Anspruch 8 oder 9 zum Balligdrehen von Bandsägeriemenscheiben (3, 4).

11. Verwendung einer Bandsäge mit einer Vorrichtung (9) nach Anspruch 8 oder 9 zum Balligdrehen einer Bandsägeriemenscheibe mit einem Profil (39), das durch zwei verschiedene Radii (40, 41) definiert ist, wobei der Radius (40) an der Vorderkante (42) kleiner als der Radius (41) an der Hinterkante (43) ist.

## Revendications

1. Procédé de profilage d'une poulie (3, 4) pour scie à ruban comprenant :
- le montage d'un support (10, 11, 12) sur la structure de la scie à ruban (2),
- le montage d'une table x-y de machine à commande numérique CNC (13, 14, 15) sur ledit support (10, 11, 12),
- le montage d'un outil (17) sur ladite table CNC x-y (13, 14, 15),
- l'alignement de la table CNC x-y (13, 14, 15) et dudit outil (17) avec la poulie (3) à profiler,
- la programmation de la table CNC x-y (13, 14, 15) telle que, une fois l'opération de profilage commencée, ledit outil (17) est amené en contact avec la surface de la poulie (3) et ledit outil (17) suit ensuite une trajectoire déterminée telle que la poulie est profilée avec un profil déterminé,
- l'entraînement de la poulie, et
- le commencement de l'opération de profilage.

2. Procédé selon la revendication 1, **caractérisé en ce que** durant l'étape d'alignement un axe de la table CNC x-y (13, 14, 15) est positionné perpendiculairement à l'axe (21) de la poulie (3) et l'autre axe de la table CNC x-y est positionné parallèlement à l'axe (21) de la poulie.

3. Procédé selon l'une des revendications 1 ou 2, **caractérisé en ce qu'**un laser d'alignement, monté sur ladite table CNC x-y (13, 14, 15) est utilisé durant l'étape d'alignement.

4. Procédé selon l'une des revendications 1 à 3, **caractérisé en ce qu'**un moteur d'entraînement séparé (32) est monté sur la scie à ruban afin d'entraîner la poulie (3) indépendamment du moteur (6) de la scie à ruban.

5. Procédé selon la revendication 4, **caractérisé en ce que** ledit moteur d'entraînement (32) interagit avec une bande (5) agencée autour des poulies (3, 4) de telle sorte que les poulies soient entraînées par ledit moteur d'entraînement (32).

6. Procédé selon la revendication 5, **caractérisé en ce que** la bande (5) est un ruban d'acier sans dents de scie.

7. Procédé selon l'une des revendications 1 à 6, **caractérisé en ce qu'**un outil de tournage est utilisé en tant qu'outil (17).

8. Scie à ruban comprenant une structure (2) et un appareil (9) pour le profilage des poulies (3, 4) de la scie à ruban, l'appareil comprenant :
- un support (10, 11, 12) fixé à ladite structure (2) de la scie,
- une table CNC x-y (13, 14, 15) fixée audit support,
- un outil de coupe (17) fixé sur ladite table CNC x-y, et
- des moyens d'alignement (20, 22, 23, 24, 25) qui permettent audit outil et à ladite table CNC x-y d'être alignés avec lesdites pouliers (3, 4).

9. Scie à ruban selon la revendication 8, **caractérisée en ce que** l'appareil comprend en outre un moteur d'entraînement (32) séparé, indépendant du moteur (6) de la scie, et qui entraîne les poulies (3, 4) via une bande agencée sur les poulies.

10. Utilisation d'une scie à ruban avec un appareil (9) selon la revendication 8 ou la revendication 9 pour le profilage des poulies (3, 4) de la scie.

11. Utilisation d'une scie à ruban avec un appareil (9) selon la revendication 8 ou la revendication 9 pour le profilage d'une poulie de la scie avec un profil (39) défini par deux rayons différents (40, 41), le rayon (40) de l'arête avant (42) étant plus petit que le rayon (41) de l'arête arrière (43).
